# FASCICULE DE BREVET EUROPEEN

(11) **EP 2 200 899 B1**
(45) Date de publication et mention de la délivrance du brevet: **01.08.2012**
(21) Numéro de dépôt: 08842153.2
(22) Date de dépôt: 15.10.2008
(51) Int. Cl.: B64C 1/06, B64C 1/12

(54) **ECLISSAGE DE RAIDISSEURS EN OMÉGA AU NIVEAU D'UNE JONCTION CIRCONFÉRENTIELLE D'UN FUSELAGE D'AVION**
SPLEISSEN VON OMEGA-FÖRMIGEN VERSTEIFUNGSVORRICHTUNGEN AN EINEM UMFANGSGELENK EINES FLUGZEUGRUMPFS
SPLICING OF OMEGA-SHAPED STIFFENERS AT A CIRCUMFERENTIAL JOINT IN AN AIRCRAFT FUSELAGE

(30) Priorité: 18.10.2007 FR 0758406
(43) Date de publication de la demande: 30.06.2010
(73) Titulaire: AIRBUS OPERATIONS (SAS), 31060 Toulouse (FR)
(72) Inventeur: CAZENEUVE, Hélène, F-31830 Plaisance du Touch (FR); CACCIAGUERRA, Bruno, F-31810 Clermont le Fort (FR)
(74) Mandataire: Fourcade, Emmanuelle
(86) Numéro de dépôt international: PCT/FR2008/051862
(87) Numéro de publication internationale: WO 2009/053645

(56) Documents cités:
- EP-A- 1 719 698
- US-A- 5 518 208
- US-A1- 2006 060 705

## Description

La présente invention est relative au domaine de l'assemblage de tronçons d'un fuselage d'avion. Plus particulièrement, l'invention concerne l'assemblage de raidisseurs de deux tronçons par des éclisses au niveau d'une jonction circonférentielle.

Un fuselage d'avion est une structure constituée généralement de plusieurs panneaux assemblés entre eux. Lesdits panneaux sont renforcés, à l'intérieur du fuselage, par des cadres de renforts et des raidisseurs. Les cadres de renforts sont positionnés suivant des sections du fuselage sensiblement perpendiculaires à un axe longitudinal du fuselage. Les raidisseurs s'étendent sur les panneaux suivant l'axe longitudinal.

Lorsque le fuselage est réalisé par l'assemblage d'au moins deux tronçons, la jonction entre les deux tronçons est dite circonférentielle. Au niveau d'une jonction circonférentielle, le raidisseur est interrompu et se présente sous la forme de plusieurs éléments de raidisseurs sensiblement alignés, avec un élément par tronçon.

Cependant, les efforts que doit subir le raidisseur doivent être transmis d'un élément de raidisseur à un autre malgré la présence des interruptions.

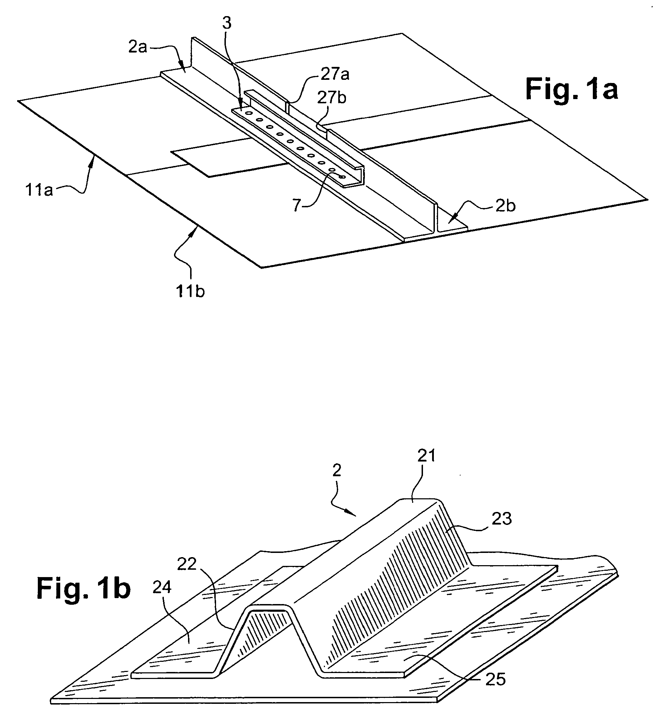

Pour assembler deux éléments d'un raidisseur entre deux tronçons 11 a, 11b, comme illustré sur la figure 1a, il est connu dans l'état de la technique, de rajouter une éclisse 3 à des extrémités 27a, 27b des éléments 2a, 2b de raidisseur, situées au niveau de la jonction circonférentielle 5, afin de permettre la continuité de la transmission des efforts dans le raidisseur. Ladite éclisse prend appui sur les éléments 2a, 2b en vis à vis de chaque tronçon 11 a, 11 b, et est assemblée et fixée aux éléments 2a, 2b du raidisseur au moyen de fixations 7, telles que des rivets.

Dans le cas de panneaux réalisés en matériau métallique, les raidisseurs en matériau métallique présentent généralement une section droite ouverte qui, en raison de la forme de ladite section droite, sont dits raidisseurs en I, en J ou en T. Pour des raidisseurs présentant de telles sections droites, les éclisses généralement utilisées pour assembler les deux éléments d'un raidisseur présentent une section droite en forme de L ou de J.

Aujourd'hui, les fuselages d'avion sont le plus souvent réalisés, pour les panneaux de fuselage, les cadres de renfort, les raidisseurs et les éclisses, en alliage d'aluminium. Malgré les qualités de légèreté de l'aluminium, ce dernier présente des inconvénients en terme de tenue à la corrosion et de fatigue structurale, particulièrement sensible dans les jonctions circonférentielles à forts flux.

En outre, maintenant, de nouveaux matériaux, tels que les matériaux composites à haut module d'élasticité, permettent d'envisager des solutions plus légères que l'aluminium pour la réalisation des fuselages. Les panneaux et les raidisseurs peuvent être ainsi réalisés dans un matériau composite tel que, par exemple, un matériau à base de fibres de carbone imprégnées de résine.

Pour de tels panneaux, les raidisseurs présentant des caractéristiques structurales optimales ont une section fermée dit en oméga. Comme illustré sur la figure 1b, un raidisseur 2 comporte une tête 21, deux âmes 22, 23 et deux semelles 24, 25. Le raidisseur est fixé sur une face d'un panneau du fuselage par les deux semelles 24, 25.

Dans le cas de raidisseurs en matériau métallique, de type I, J, T, l'éclisse en J ou en L se fixe sur chacune des deux éléments d'un raidisseur par des fixations placées au niveau des semelles et de l'âme. Dans le cas de raidisseurs présentant une section droite fermée, tel que les raidisseurs dits en oméga, les fixations posées au niveau des âmes pour assembler chaque élément de raidisseur à l'éclisse sont très difficiles à contrôler en raison de l'impossibilité pratique d'accéder à l'intérieur de la section fermée du raidisseur.

La présente invention propose, selon la revendication 1, au niveau d'une jonction circonférentielle d'un fuselage d'avion, un éclissage entre deux éléments d'un raidisseur présentant une section transversale fermée qui évite la nécessité de poser des fixations dans l'âme et la tête dudit raidisseur tout en garantissant la continuité de la transmission des efforts longitudinaux.

Dans un exemple de réalisation, chaque élément de raidisseur comporte une tête entre les deux âmes déterminant une section droite de raidisseur dite en oméga.

Afin de prendre en compte le fait que tous les efforts de traction-compression cheminent entre les éléments de raidisseur par les semelles desdits éléments, chaque semelle de chaque élément de raidisseur présente une zone d'extrémité ayant une section droite augmentée et de longueur supérieure à une distance Dₐ, D_{b} de recouvrement de l'éclisse.

De préférence, pour que l'ensemble des efforts de traction-compression dans le raidisseur soit transmis des semelles des éléments aux semelles de l'éclisse, chaque longueur Dₐ, D_{b} de recouvrement est déterminée afin de permettre la pose de fixations travaillantes sur ladite longueur de recouvrement. De plus, les surfaces d'appui des semelles de l'éclisse sont en contact avec les semelles des éléments de raidisseur sur sensiblement toutes lesdites surfaces d'appui sur les longueurs de recouvrement Dₐ, D_{b}.

Dans un exemple de réalisation, les surfaces d'appui sont sensiblement planes.

Dans un autre exemple de réalisation, lesdites surfaces d'appui sont conformées pour être en contact avec les éléments de raidisseurs et les revêtements en tenant compte de la géométrie desdits éléments et desdits revêtements.

Dans un mode de réalisation, l'éclisse comporte une tête, deux âmes et deux semelles définissant une section droite en forme de oméga, les dimensions intérieures de ladite section droite étant déterminées pour permettre de fixer l'éclisse superposée aux éléments de raidisseur en assurant le contact des semelles de l'éclisse avec les semelles des éléments de raidisseur.

De préférence, afin d'assurer une fonction de drainage et d'inspection des fixations posées sur la virole, la tête de l'éclisse comporte au moins un évidement.

Dans un autre mode de réalisation, l'éclisse comporte deux parties latérales, comportant chacune une âme et une semelle, lesdites deux parties latérales étant positionnées de chaque coté des âmes des éléments de raidisseurs et reliées par une partie centrale, positionnée longitudinalement sur l'éclisse entre les extrémités desdits éléments de raidisseur et apte à maintenir, en position relative l'une par rapport à l'autre, les deux parties latérales lorsque l'éclisse est mise en place.

Dans une forme de réalisation, afin de participer à la partie structurale de l'assemblage, la partie centrale comporte une surface d'appui, dans le prolongement des surfaces d'appui des semelles des parties latérales.

Dans une autre forme de réalisation, afin d'éviter le déversement des âmes des parties latérales, la partie centrale comporte au moins une nervure de renforcement, ladite nervure étant sensiblement dans un plan de section droite de l'éclisse et étant fixée aux âmes des parties latérales.

Dans une autre variante de réalisation, afin d'améliorer la stabilité des parties latérales, lesdites parties latérales comportent un bord tombé, à l'extrémité des âmes opposé aux semelles de l'éclisse.

Dans un autre mode de réalisation, l'éclisse comporte deux parties latérales indépendantes, une première partie agencée sur un coté des âmes des éléments de raidisseurs, une seconde partie sur l'autre coté des âmes.

La description détaillée de l'invention est faite en référence aux figures qui représentent :
Figure 1a, déjà citée, une vue d'un raidisseur assemblé au moyen d'une éclisse selon l'art antérieur,
**Figure 1b****,** déjà citée, une vue en perspective d'un raidisseur présentant une section transversale en oméga,
**Figure 2****,** une vue schématique d'une partie d'un fuselage d'avion,
**Figure 3a****,** une vue en perspective schématique d'un raidisseur en oméga assemblé au moyen d'une éclisse suivant un premier mode de réalisation de l'invention,
**Figure 3b****,** une vue en perspective de l'éclisse assemblant deux éléments d'un raidisseur dit en oméga suivant le premier mode de réalisation de l'invention,
**Figure 4a****,** une vue en perspective schématique d'un raidisseur en oméga assemblé au moyen d'une éclisse suivant un deuxième mode de réalisation de l'invention,
**Figure 4b****, c, d, e,** différentes vues de l'éclisse suivant le deuxième mode de réalisation illustrant des variantes de réalisation de l'éclisse,
**Figure 5****,** une vue en perspective schématique d'un raidisseur en oméga assemblé au moyen d'une éclisse suivant un troisième mode de réalisation de l'invention.

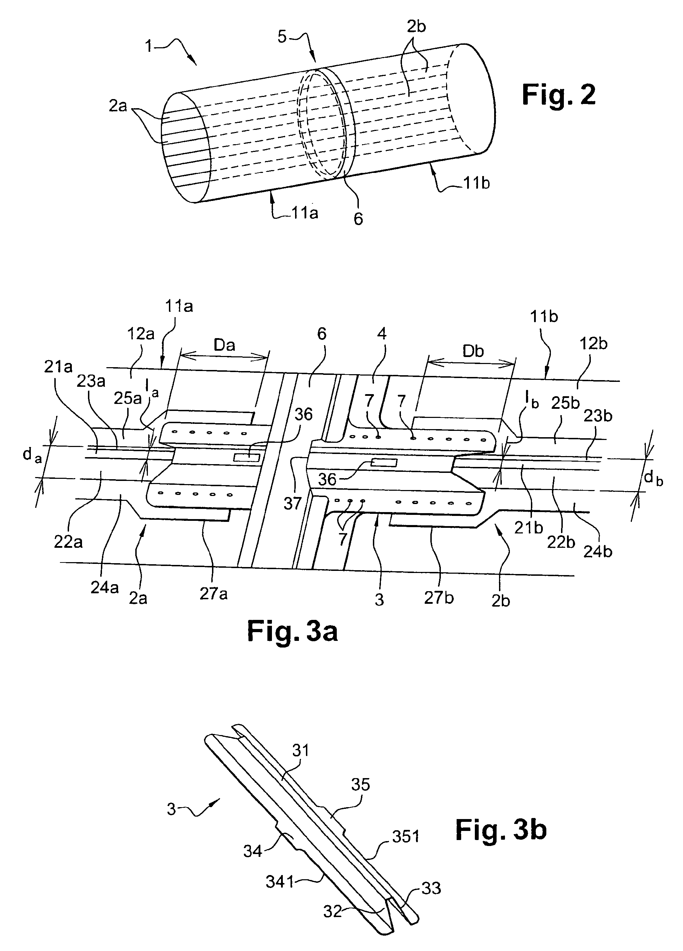

Un fuselage d'avion 1, comme illustré sur la figure 2, est réalisé par l'assemblage d'au moins deux tronçons 11 a, 11b, sensiblement cylindriques, au niveau de jonctions circonférentielles 5. Chaque tronçon 11 a, 11 b comporte un revêtement 12a, 12b réalisé avec au moins un panneau de fuselage. Au niveau d'une jonction 5, les panneaux sont assemblés entre eux par une virole 4.

Afin d'assurer la rigidité nécessaire au fuselage 1, ledit fuselage comporte des cadres de renforts 6 et des raidisseurs. Les cadres de renforts 6, la virole 4 et les panneaux sont assemblés au niveau de la jonction circonférentielle.

Au niveau d'une jonction circonférentielle 5, les raidisseurs sont interrompus et se présentent sous la forme de deux éléments 2a, 2b par raidisseur, situés en vis à vis lorsque les deux tronçons sont assemblés et s'étendant, suivant un axe longitudinal du fuselage, sur chaque tronçon 11a, 11 b. Les éléments 2a, 2b d'un raidisseur sont fixés sur un revêtement 12a, 12b d'un tronçon 11a, 11 b du fuselage.

Afin de transmettre les efforts d'un élément de raidisseur à un autre malgré la présence de l'interruption et ainsi assurer la continuité structurale du raidisseur, les deux éléments 2a, 2b sont assemblés au moyen d'une éclisse 3. Ladite éclisse prend appui sur les extrémités 27a, 27b desdits deux éléments, et est fixée aux éléments 2a, 2b du raidisseur au moyen de fixations 7, telles que des rivets.

Une encoche 37 est réalisée dans le cadre 6 pour assurer le passage de l'éclisse 3 et permettre la transmission des efforts d'un élément de raidisseur à un autre au moyen de ladite éclisse.

Dans les exemples de réalisation illustrés par les figures 3a à 5, l'assemblage d'un raidisseur, au niveau d'une jonction circonférentielle 5 entre deux tronçons 11a, 11 b d'un fuselage d'avion, est décrit dans le cas d'un raidisseur à section fermée présentant une section transversale en forme de oméga.

L'élément 2a d'un raidisseur, comme illustré sur la figure 3a, comporte une tête 21 a, deux âmes 22a, 23a, et deux semelles 24a, 25a. Les deux semelles sont sensiblement coplanaires. Chaque semelle 24a, 25a est reliée à une âme 22a, 23a inclinée par rapport au plan des semelles. Lesdites âmes maintiennent la tête 21a à une distance sensiblement constante des semelles. L'élément 2a du raidisseur est fixé sur le revêtement 12a du tronçon 11 a par les deux semelles 24a, 25a. Ainsi, le raidisseur 2a, assemblé sur le revêtement 12a, constitue avantageusement une structure caissonnée rigide et résistante.

De façon similaire, l'élément 2b du raidisseur comporte une tête 21 b, deux âmes 22b, 23b, et est assemblé sur le revêtement 12b du tronçon 11 b de la même façon.

Pour les besoins de la description des exemples de réalisation, la tête 21a, respectivement 21b, a une largeur **Iₐ,** respectivement **I_{b}.** Les deux semelles 24a, 25a, respectivement 24b, 25b sont séparées par une distance **dₐ,** respectivement **d_{b}.** Dans le cas général des raidisseurs en oméga, comme présenté sur les figures 3a à 5, la distance **dₐ,** respectivement **d_{b},** est supérieure à la largeur **Iₐ,** respectivement **I_{b}**. Les principes de l'invention sont toutefois applicables dans le cas de raidisseurs ne remplissant pas cette condition **dₐ** supérieure ou égale à **Iₐ,** respectivement **d_{b}** supérieure ou égale à **I_{b}-**

Suivant l'invention et contrairement aux règles de l'art, l'éclisse assurant la transmission des efforts entre les éléments de raidisseur est entièrement fixée seulement par les semelles de sorte qu'aucune fixation n'est fixée sur les âmes ou la tête, c'est à dire à un emplacement où la fixation est dans une zone aveugle rendant un contrôle quasiment impossible à réaliser sur le plan industriel, par exemple dans le cas d'une jonction comportant un grand nombre de fixations.

Pour atteindre ce résultat tout en garantissant la qualité structurale de la jonction, il est nécessaire d'adapter conjointement l'éclisse et les éléments de raidisseur, au moins dans les zones où l'éclisse est fixée.

Suivant un premier mode de réalisation, présenté par la figure 3a, l'éclisse 3, qui assure la continuité structurale entre les deux éléments 2a, 2b, sensiblement situés en vis à vis, d'un raidisseur, présente une section transversale sensiblement en forme de oméga, comme pour les éléments 2a, 2b de raidisseur. Ladite éclisse comporte une tête 31, deux âmes 32, 33 et deux semelles 34, 35, lesdites semelles comportant une surface d'appui 341, 351. Ladite éclisse recouvre les extrémités 27a, 27b des deux éléments 2a, 2b, situés de chaque coté de la jonction de sorte que la tête 31 de l'éclisse 3 recouvre les têtes 21 a, 21 b des extrémités 27a, 27b des deux éléments 2a, 2b de raidisseur, et de sorte que l'âme 32, respectivement 33, recouvre les âmes 22a, 23a respectivement 22b, 23b des extrémités 27a, 27b des éléments 2a, 2b de raidisseur.

La surface d'appui 341, respectivement 351, de l'éclisse 3 est en contact avec les semelles 24a, 24b, respectivement 25a, 25b, des extrémités 27a, 27b des deux éléments 2a, 2b de raidisseur et sur le revêtement 12a, respectivement 12b ou la virole 4, lorsque ladite virole est placée sur les revêtements 12a, 12b situés du même coté que les éléments 2a, 2b de raidisseur. Les surfaces d'appui 341, respectivement 351 sont fixées sur les semelles 24a, 24b, respectivement 25a, 25b et la virole 4 ou le revêtement 12a, 12b au moyen de fixations 7, telles que par exemple des rivets.

De préférence, les surfaces d'appui 341, 351, de l'éclisse 3 sont conformées pour assurer le contact dans toutes les zones où les fixations travaillantes doivent être posées en tenant compte de la géométrie des semelles 24a, 24b, 25a, 25b des éléments 2a, 2b de raidisseur et de la virole 4 ou le revêtement 12a, 12b.

Dans un autre exemple de réalisation, lorsque les surfaces d'appui 341, 351, de l'éclisse 3 sont sensiblement planes, des cales d'épaisseur sont positionnées de telle sorte que l'éclisse 3 est parfaitement en contact sur lesdits éléments 2a, 2b de raidisseur et la virole 4 ou le revêtement 12a, 12b.

L'éclisse 3 s'étend sur une longueur de recouvrement **Dₐ,** respectivement **D_{b},** de chaque élément 2a, respectivement 2b de raidisseur de sorte que le nombre de fixations 7 mises en place sur ladite longueur de recouvrement soit suffisant pour que l'ensemble des efforts de traction-compression soit transmis des semelles 24a, 24b, respectivement 25a, 25b des éléments 2a, 2b aux semelles 34, 35 de l'éclisse 3. En raison de la fixation de l'éclisse 3 uniquement sur les semelles 24a, 24b, 25a, 25b des éléments 2a, 2b de raidisseur, la longueur de recouvrement **Dₐ, D_{b},** est supérieure, par rapport à un mode de réalisation d'un éclissage conventionnel entre deux tronçons, à la longueur de recouvrement d'une éclisse fixée également sur l'âme des éléments de raidisseur.

Pour assurer la transmission des efforts, les surfaces d'appui 341, 351 des semelles 34, 35 de l'éclisse 3 doivent nécessairement être en contact avec les semelles 24a, 24b, 25a, 25b des éléments 2a, 2b de raidisseur. Pour cela, les dimensions intérieures de la section droite de l'éclisse (3) sont telles que lesdites dimensions intérieures sont toujours supérieures ou égales aux dimensions extérieures d'un raidisseur théorique. Le raidisseur théorique se caractérise par une enveloppe de tous les raidisseurs, en position relative, en tenant compte des incertitudes dimensionnelles et des incertitudes de tolérance de positionnement, inévitables en raison des tolérances de fabrication, entre les deux éléments de raidisseur.

Au niveau de la jonction entre les éléments 2a, 2b de raidisseur et l'éclisse 3, l'ensemble des efforts est transmis d'un élément de raidisseur à un autre par les semelles 24a, 24b, 25a, 25b desdits éléments. Pour tenir compte de l'augmentation des efforts dans lesdites semelles, la section droite des semelles des éléments 2a, 2b de raidisseur est augmentée, sur une zone d'extrémité de longueur supérieure à la longueur de recouvrement Dₐ, D_{b} de telle sorte que les contraintes restent dans la limite structurale du matériau. Avantageusement, pour assurer ainsi une transmission progressive des efforts et pour éviter une surépaisseur de la semelle 24a, 24b, 25a, 25b, à l'extrémité de l'élément de raidisseur et dans la zone de fixation avec l'éclisse, chaque semelle est élargie. Cet élargissement des semelles permet également de tenir compte des tolérances de désalignement entre les deux éléments de raidisseur lors de l'assemblage des tronçons.

Les semelles 34, 35 de l'éclisse 3 sont également dimensionnées en épaisseur et en largeur pour transmettre les efforts. De préférence, la largeur des semelles 34, 35 est choisie de telle sorte que, en raison des tolérances de dimensionnement et positionnement des éléments 2a, 2b de raidisseur, les semelles 34, respectivement 35, de l'éclisse sont, sur toute leur longueur, toujours en appui total sur les semelles 24a, 24b, respectivement 25a, 25b, desdits éléments.

Afin d'assurer une fonction de drainage et de permettre un contrôle des fixations, pour l'assemblage des deux tronçons entre eux au niveau de la jonction circonférentielle, se situant sur la virole 4, sous la tête 31 de l'éclisse 3 en forme de oméga, au moins un évidement 36 est réalisé dans la tête 31 de ladite éclisse.

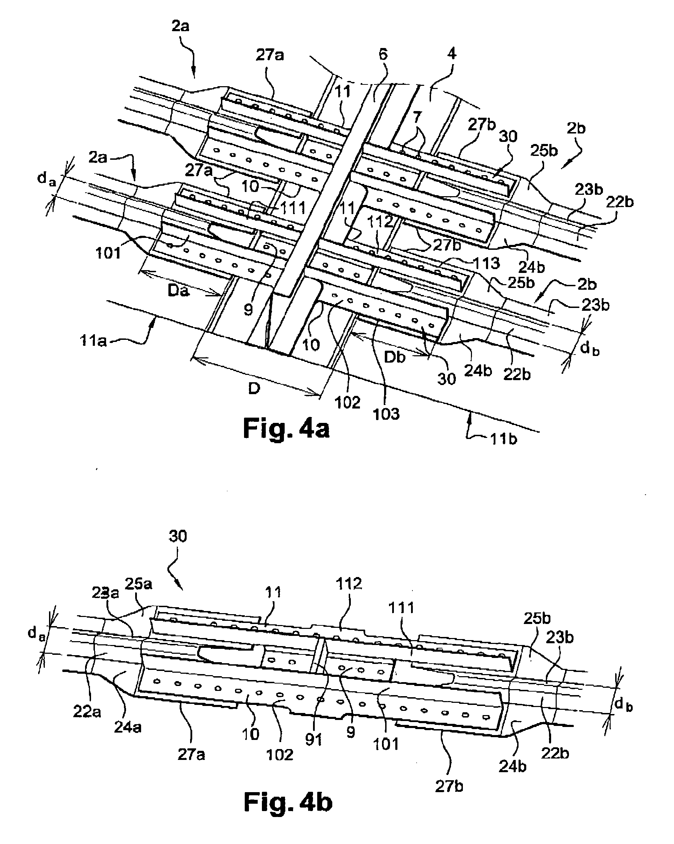

Dans un deuxième mode de réalisation, illustré par la figure 4a, l'éclisse 30 permettant l'assemblage des deux éléments 2a, 2b de raidisseur en oméga comporte deux parties latérales 10, 11 présentant chacun une section transversale sensiblement en forme de L et une partie centrale 9 reliant les deux parties latérales 10, 11 et maintenant ensemble, dans une position prédéterminée, les deux parties latérales pour que lesdites deux parties latérales prennent appui uniquement sur les semelles des éléments 2a, 2b de raidisseur.

La partie centrale 9 est de largeur supérieure à la distance **dₐ** ou **d_{b}** entre les deux semelles 24a, 25a ou 24b, 25b d'un élément 2a ou 2b de raidisseur afin de tenir compte, comme décrit dans le cas du premier mode de réalisation, des tolérances de désalignement entre les deux éléments 2a, 2b du raidisseur lors de l'assemblage des deux tronçons 11a, 11b.

Chaque partie latérale 10, 11 comporte une âme 101, 111 et une semelle 102, 112 comportant une surface d'appui 103, 113. Les deux parties latérales sont positionnées de part et d'autre des éléments 2a, 2b du raidisseur en oméga avec leurs âmes 101, 111 positionnées du coté des âmes 22a, 22b, 23a, 23b des éléments 2a, 2b du raidisseur en oméga. Les semelles 102, 112 de l'éclisse 30 sont fixées sur les semelles 24a, 24b, 25a, 25b des deux éléments 2a, 2b de raidisseur et la virole 4 ou le revêtement 12a, 12b.

De façon similaire au premier mode de réalisation, la surface d'appui 103, respectivement 113, de la partie latérale 10, respectivement 11, prend appui sur les semelles 24a, 24b, respectivement 25a, 25b des extrémités 27a, 27b des deux éléments 2a, 2b de raidisseur et sur la virole 4 ou le revêtement 12a, respectivement 12b. Les surfaces d'appui 103, 113 se fixent respectivement sur les semelles 24a, 24b et 25a, 25b et la virole 4 au moyen de fixations 7.

Les parties latérales s'étendent, de part et d'autre des extrémités des deux éléments de raidisseur, sur la longueur de recouvrement **Dₐ, D_{b}** suffisante pour permettre la pose de fixations travaillantes 7 et ainsi assurer la transmission des efforts de traction-compression des semelles 24a, 24b, 25a, 25b des éléments 2a, 2b aux semelles 102, 112 de l'éclisse 30.

La partie centrale 9, comporte au moins une zone structurale travaillante. Ladite partie centrale est positionnée entre les deux extrémités 27a, 27b des deux éléments 2a, 2b de raidisseur lors de la mise en place de l'éclisse.

Dans une forme de réalisation, ladite partie structurale de la partie centrale 9 comporte une surface d'appui 93, sensiblement dans le prolongement des surfaces d'appui des semelles, conformée pour prendre appui sur les revêtements 12a, 12b, ou la virole 4 entre les extrémités 27a, 27b des éléments de raidisseurs. Ladite partie centrale est donc de longueur inférieure à une distance de séparation **D** entre les deux extrémités 27a, 27b des deux éléments 2a, 2b de raidisseur.

Avantageusement, la partie centrale 9 est fixée, au moyen de fixations 7, telles que des rivets, sur la virole 4 ou le revêtement 12a, 12b et participe à la qualité structurale de l'assemblage.

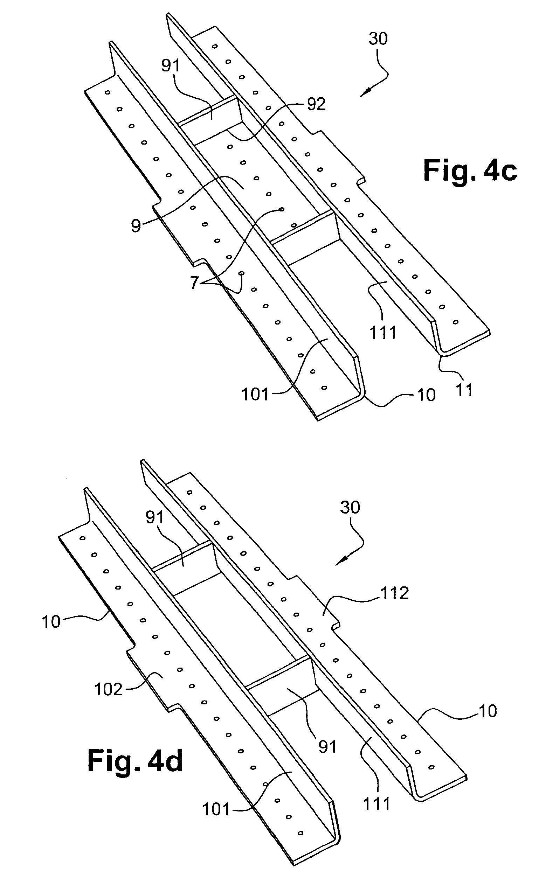

Dans une autre forme de réalisation de ce deuxième mode, la partie centrale 9 comporte en outre au moins une nervure de renforcement 91, comme illustré sur les figures 4b, 4c, 4d, sensiblement perpendiculaire aux âmes 101, 111 des parties latérales 10, 11 et fixée auxdites âmes des parties latérales 10, 11. L'ajout d'une nervure 91 permet de mieux repartir la consolidation et éviter le déversement des âmes 101, 111 des deux parties latérales 10, 11.

Dans l'exemple de la figure 4b, la partie centrale 9 comporte une nervure centrale 91 sensiblement perpendiculaire aux âmes 101, 111 des parties latérales 10, 11.

Dans l'exemple illustré sur la figure 4c, la partie centrale 9 comporte deux nervures 91, sensiblement perpendiculaires aux âmes 101, 111 des parties latérales 10, 11 et lesdites nervures sont positionnées chacune à une des extrémités libres 92 de ladite partie centrale.

Dans l'exemple illustré sur la figure 4d, la partie centrale 9 comporte uniquement deux nervures 91, sensiblement perpendiculaires aux âmes 101, 111 des parties latérales 10, 11. La suppression de la partie centrale 9 permet un gain de masse.

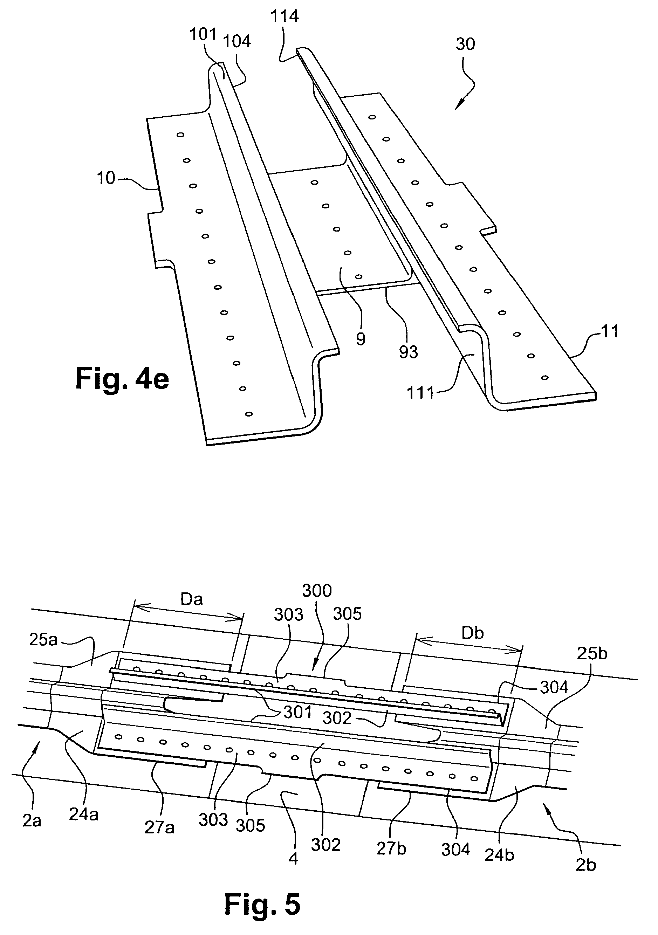

Dans une variante de réalisation de ce second mode, illustrée sur la figure 4e, les parties latérales 10, 11 comportent en outre au niveau de l'extrémité des âmes 101, 111 opposée à la semelle 102, 112, un bord tombé 104, 114, en direction des âmes des deux éléments de raidisseur, de sorte à renforcer la stabilité de l'éclisse 30.

Dans cet exemple, l'éclisse comporte les deux parties latérales 10, 11 et une partie centrale 9 présentant une surface d'appui 93 dans le prolongement des surfaces d'appui 103, 113 des semelles 102, 112 desdites deux parties latérales.

Dans un troisième mode de réalisation, illustré par la figure 5, l'assemblage des deux éléments 2a, 2b de raidisseur est réalisé par une éclisse 300 comportant deux parties latérales 305 indépendantes, chaque partie présentant une section transversale sensiblement en forme de Z, et positionnée de part et d'autre des extrémités des éléments du raidisseur.

Chaque partie latérale 305 comporte une tête 301, une âme 302 et une semelle 303, lesdites semelles comportant une surface d'appui 304.

La tête 301 de chaque partie latérale 305 est positionnée du coté des âmes 22a, 22b, respectivement 23a, 23b des deux éléments 2a, 2b.

La surface d'appui 304 d'une première partie latérale 305, respectivement la seconde partie latérale 305, prend appui sur les semelles 24a, 24b, respectivement 25a, 25b des extrémités 27a, 27b des deux éléments 2a, 2b de raidisseur et sur la virole 4 ou les revêtements 12a, 12b. Les surfaces d'appui 304 se fixent respectivement sur les semelles 24a, 24b et 25a, 25b et la virole 4 ou les revêtements 12a, 12b au moyen de fixations 7.

De façon similaire aux deux autres modes, les parties latérales 305 s'étendent, de part et d'autre des extrémités des deux éléments de raidisseur, sur la longueur de recouvrement **Dₐ, D_{b}** suffisante pour permettre la pose de fixations travaillantes 7 et ainsi assurer la transmission des efforts de traction-compression des semelles 24a, 24b, 25a, 25b des éléments 2a, 2b aux semelles 303 de l'éclisse 300.

Avantageusement, le raidisseur en oméga et les différentes éclisses décrites sont intégralement réalisés en matériau composite. L'utilisation de matériaux composites permet de s'affranchir des problèmes thermiques et de corrosion rencontrés sur les pièces métalliques.

Les exemples d'éclissages de raidisseur, au niveau d'une jonction circonférentielle, sont décrits dans le cadre d'un raidisseur à section fermée présentant une section transversale en forme de oméga sans que ce choix soit limitatif de l'invention. La mise en oeuvre de l'invention peut être adaptée à tous les raidisseurs du fuselage et à toute section fermée de raidisseur, telle que par exemple une section transversale trapézoïdale ou carrée.

L'invention permet donc d'obtenir, au niveau d'une jonction circonférentielle d'un fuselage d'avion, un éclissage entre deux éléments d'un raidisseur présentant une section transversale fermée, en particulier un raidisseur composite en oméga, qui évite la nécessité de poser des fixations dans l'âme et la tête dudit raidisseur tout en garantissant la continuité de la transmission des efforts longitudinaux.

## Revendications

1. Fuselage (1) d'avion, comportant une jonction circonférentielle (5) d'au moins deux tronçons (11a, 11b), chaque tronçon comportant :
- un revêtement (12a)(12b),
- au moins un élément (2a)(2b) d'au moins un raidisseur,
chaque élément (2a)(2b) d'un raidisseur :
- étant positionné sensiblement en vis à vis, au niveau de la jonction (5), de l'autre élément,
- comportant deux âmes (22a, 23a)(22b, 23b) et deux semelles (24a, 25a)(24b, 25b) déterminant avec le revêtement une section fermée,
- et comportant une tête (21a)(21b) entre les deux âmes (22a, 23a)(22b, 23b) déterminant une section droite de raidisseur dite en oméga,
dans lequel fuselage les deux éléments (2a, 2b) en vis à vis d'un raidisseur sont assemblés au moyen d'une éclisse (3)(30), ledit raidisseur et ladite éclisse étant en matériau composite,
**caractérisé en ce que** l'éclisse (3)(30) est associée à un seul raidisseur et :
- comporte deux parties latérales comportant chacune une âme (32, 33)(101, 111) et une semelle (34, 35)(102, 112), lesdites semelles étant disjointes et comportant chacune une surface d'appui (341, 351)(103, 113) en contact avec une semelle (24a, 25a)(24b, 25b) de chaque élément (2a, 2b) d'un raidisseur,
- comporte une partie centrale (31)(9) reliant lesdites parties latérales,
- et est fixée aux revêtements (12a, 12b) et aux éléments (2a, 2b) au moyen de fixations travaillantes (7) positionnées uniquement sur les semelles (34, 35)(102, 112) de l'éclisse (3)(30).

2. Fuselage d'avion suivant la revendication 1 dans lequel chaque longueur Dₐ, D_{b} de recouvrement est déterminée afin de permettre la pose de fixations travaillantes (7) sur ladite longueur de recouvrement pour que l'ensemble des efforts de traction-compression dans le raidisseur soit transmis des semelles (24a, 25a, 24b, 25b) des éléments (2a, 2b) aux semelles (34, 35)(102, 112) de l'éclisse (3)(30).

3. Fuselage d'avion suivant l'une des revendications précédentes dans lequel les surfaces d'appui (341, 351)(103, 113) des semelles (34, 35)(102, 112) de l'éclisse (3)(30) sont en contact avec les semelles (24a, 25a, 24b, 25b) des éléments (2a, 2b) de raidisseur sur sensiblement toute lesdites surfaces d'appui sur les longueurs de recouvrement Dₐ, D_{b}.

4. Fuselage d'avion suivant la revendication 3 dans lequel les surfaces d'appui (341, 351)(103, 113) sont conformées pour être en contact avec les éléments (2a, 2b) de raidisseurs et les revêtements (12a, 12b) en tenant compte de la géométrie desdits éléments et desdits revêtements.

5. Fuselage d'avion suivant l'une des revendications précédentes dans lequel la partie centrale de l'éclisse (3) est une tête (31) définissant avec les deux âmes (32, 33) et les deux semelles (34, 35) formant lesdites parties latérales une section droite en forme de oméga, les dimensions intérieures de ladite section droite étant déterminées pour permettre de fixer l'éclisse (3) superposée aux éléments (2a, 2b) de raidisseur en assurant le contact des semelles de l'éclisse avec les semelles des éléments (2a, 2b) de raidisseur.

6. Fuselage d'avion suivant l'une des revendications 1 à 4 dans lequel la partie centrale (9) de l'éclisse (30) est positionnée longitudinalement sur l'éclisse (30) entre des extrémités (27a, 27b) desdits éléments de raidisseur situées au niveau de ladite jonction circonférentielle (5), et est apte à maintenir, en position relative l'une par rapport à l'autre, les deux parties latérales lorsque l'éclisse (30) est mise en place.

7. Fuselage d'avion suivant la revendication 6 dans lequel la partie centrale (9) comporte une surface d'appui (93), dans le prolongement des surfaces d'appui (103, 113) des semelles (102, 112) des parties latérales (10, 11), fixée aux revêtements (12a, 12b) au moyen de fixations travaillantes (7).

8. Fuselage d'avion suivant l'une des revendications 6 ou 7 dans lequel la partie centrale (9) comporte au moins une nervure (91) de renforcement de la stabilité de l'éclisse (30), ladite nervure étant sensiblement dans un plan de section droite de l'éclisse (30) et étant fixée aux âmes (101, 111) des parties latérales (10, 11).

9. Fuselage d'avion suivant l'une des revendications 6 à 8 dans lequel les parties latérales (10, 11) comportent un bord tombé (104, 114), à l'extrémité des âmes (101, 111) opposé aux semelles (102, 112) de l'éclisse (30).

## Claims

1. - An aircraft fuselage (1) comprising a circumferential joint (5) of at least two sections (11a, 11b), each section comprising:
- a skin (12a) (12b),
- at least one element (2a) (2b) of at least one stiffener,
each element (2a) (2b) of a stiffener:
- being positioned substantially facing the other element at the joint (5),
- comprising two webs (22a, 23a) (22b, 23b) and two flanges (24a, 25a) (24b, 25b) forming with the skin a closed section,
- and comprising a head (21a) (21b) between the two webs (22a, 23a) (22b, 23b) forming a stiffener cross-section referred to as being omega-shaped,
in which fuselage the two opposing elements (2a, 2b) forming a stiffener are assembled by means of a splicing piece (3) (30), said stiffener and said splicing piece being made from composite material,
**characterised in that** the splicing piece (3) (30) is associated with a single stiffener and:
- comprises two lateral parts each comprising a web (32, 33) (101, 111) and a flange (34, 35) (102, 112), said flanges being separate from each other and each comprising a bearing surface (341, 351) (103, 113) in contact with one flange (24a, 25a) (24b, 25b) of each element (2a, 2b) of a stiffener,
- comprises a central part (31) (9) connecting said lateral parts,
- is fixed to the skins (12a, 12b) and to the elements (2a, 2b) by means of working fasteners (7) positioned only on the flanges (34, 35) (102, 112) of the splicing piece (3) (30).

2. - An aircraft fuselage according to claim 1, wherein each overlap length Dₐ, D_{b} is determined so as to enable the fixing of working fasteners (7) onto said overlap length so that all tensile-compressive forces within the stiffener are transmitted from the flanges (24a, 25a, 24b, 25b) of the elements (2a, 2b) to the flanges (34, 35) (102, 112) of the splicing piece (3) (30).

3. - An aircraft fuselage according to one of the previous claims, wherein the bearing surfaces (341, 351) (103, 113) of the flanges (34, 35) (102, 112) of the splicing piece (3) (30) are in contact with the flanges (24a, 25a, 24b, 25b) of the stiffener elements (2a, 2b) on substantially all of said bearing surfaces over the overlap lengths Dₐ, D_{b}.

4. - An aircraft fuselage according to claim 3, wherein the bearing surfaces (341, 351) (103, 113) are shaped to be in contact with the stiffener elements (2a, 2b) and skins (12a, 12b), taking into account the geometry of said elements and said skins.

5. - An aircraft fuselage according to one of the previous claims, wherein the central part of the splicing piece (3) is a head (31) defining with the two webs (32, 33) and the two flanges (34, 35) forming said lateral parts, an omega-shaped cross-section, the inner dimensions of said cross-section being determined so as to enable the fixing of the splicing piece (3) in a superimposed manner on the stiffener elements (2a, 2b) while assuring contact between the flanges of the splicing piece and the flanges of the stiffener elements (2a, 2b).

6. - An aircraft fuselage according to one of claims 1 to 4, wherein the central part (9) of the splicing piece (30) is positioned longitudinally on the splicing piece (30) between ends (27a, 27b) of said stiffener elements located at said circumferential joint (5), and is capable of maintaining, in a position relative to each other, the two lateral parts when the splicing piece (30) is being positioned.

7. - An aircraft fuselage according to claim 6, wherein the central part (9) comprises a bearing surface (93), in line with the bearing surfaces (103, 113) of the flanges (102, 112) of the lateral parts (10, 11), fixed to the skins (12a, 12b) by means of working fasteners (7).

8. - An aircraft fuselage according to one of claims 6 or 7, wherein the central part (9) comprises at least one rib (91) for increasing the stability of the splicing piece (30), said rib being substantially in a cross-sectional plane of the splicing piece (30) and being fixed to the webs (101, 111) of the lateral parts (10, 11).

9. - An aircraft fuselage according to one of claims 6 to 8, wherein the lateral parts (10, 11) comprise a flanged edge (104, 114), at the end of the webs (101, 111) opposite the flanges (102, 112) of the splicing piece (30).

## Patentansprüche

1. Flugzeugrumpf (1), umfassend eine Umfangsverbindung (5) von zumindest zwei Abschnitten (11a, 11 b), wobei jeder Abschnitt folgendes umfasst:
- eine Außenhaut (12a) (12b),
- zumindest ein Element (2a) (2b) von zumindest einer Versteifung, wobei jedes Element (2a) (2b) einer Versteifung:
- im Bereich der Verbindung (5), in etwa gegenüber dem anderen Element angeordnet ist,
- zwei Stege (22a, 23a) (22b, 23b) und zwei Sohlen (24a, 25a) (24b, 25b) umfasst, die mit der Außenhaut einen geschlossenen Abschnitt bilden,
- und ein Kopfende (21 a) (21 b) zwischen den beiden Stegen (22a, 23a) (22b, 23b) umfasst, das einen geraden Versteifungsabschnitt bildet, dem die Form eines Omegas zugeschrieben wird,
wobei in diesem Rumpf die beiden gegenüber liegenden Elemente (2a, 2b) einer Versteifung mithilfe einer Lasche (3) (30) zusammengefügt sind, wobei die besagte Versteifung und die besagte Lasche aus einem Verbundmaterial gefertigt sind,
**dadurch gekennzeichnet, dass** die Lasche (3) (30) einer einzigen Versteifung zugeordnet ist, und:
- zwei Seitenteile umfassend jeweils einen Steg (32, 33) (101, 111) und eine Sohle (34, 35) (102, 112) umfasst, wobei die besagten Sohlen voneinander getrennt sind, und jeweils eine Auflagefläche (341, 351) (103, 113) umfassen, die eine Sohle (24a, 25a) (24b, 25b) jedes Elements (2a) (2b) einer Versteifung berührt,
- einen mittleren Teil (31) (9) umfasst, der die besagten Seitenteile verbindet,
- und sie über arbeitende Befestigungsvorrichtungen (7) an den Außenhäuten (12a) (12b) und den Elementen (2a) (2b) befestigt ist, die nur an den Sohlen (34, 35) (102, 112) der Lasche (3) (30) angeordnet sind.

2. Flugzeugrumpf nach Anspruch 1, bei dem jede Überdeckungslänge Dₐ, D_{b} bestimmt wird, um das Anbringen von arbeitenden Befestigungen (7) auf der besagten Überdeckungslänge zu ermöglichen, damit sämtliche Zug- und Kompressionskräfte in der Versteifung von den Sohlen (24a, 25a) (24b, 25b) der Elemente (2a) (2b) auf die Sohlen (34, 35) (102, 112) der Lasche (3) (30) übertragen werden.

3. Flugzeugrumpf nach einem der vorherigen Ansprüche, bei dem die Auflageflächen (341, 351) (103, 113) der Sohlen (34, 35) (102, 112) der Lasche (3) (30) die Sohlen (24a, 25a) (24b, 25b) der Elemente (2a) (2b) der Versteifung auf in etwa allen der besagten Auflageflächen auf den Überdeckungslängen Dₐ, D_{b} berühren.

4. Flugzeugrumpf nach Anspruch 3, bei dem die Auflageflächen (341, 351) (103, 113) angepasst sind, um die Elemente (2a, 2b) der Versteifungen und die Außenhäute (12a) (12b) unter Berücksichtigung der Geometrie der besagten Elemente und der besagten Außenhäute zu berühren.

5. Flugzeugrumpf nach einem der vorherigen Ansprüche, bei dem der mittlere Teil der Lasche (3) ein Kopfende (31) ist, das mit den beiden Stegen (32, 33) und den beiden Sohlen (34, 35), die die besagten Seitenteile bilden, einen geraden Abschnitt in Form eines Omegas bildet, wobei die Innenabmessungen des besagten geraden Abschnittes bestimmt werden, um es zu ermöglichen, die den Elementen (2a, 2b) der Versteifung übergelagerte Lasche zu befestigen, und dabei für eine Berührung der Sohlen der Lasche mit den Sohlen der Elemente (2a, 2b) der Versteifung zu sorgen.

6. Flugzeugrumpf nach einem der Ansprüche 1 bis 4, bei dem der mittlere Teil (9) der Lasche (30) längs auf der Lasche (30) zwischen den Enden (27a, 27b) der besagten Versteifungselemente positioniert ist, die sich im Bereich der besagten Umfangsverbindung (5) befinden, und er in der Lage ist, die beiden Seitenteile in einer Position zueinander festzuhalten, wenn die Lasche (30) angebracht ist.

7. Flugzeugrumpf nach Anspruch 6, bei dem der mittlere Teil (9) eine Auflagefläche (93) in der Verlängerung der Auflageflächen (103, 113) der Sohlen (102, 112) der Seitenteile (10, 11) umfasst, die mit arbeitenden Befestigungsvorrichtungen (7) an den Außenhäuten (12a, 12b) befestigt ist.

8. Flugzeugrumpf nach einem der Ansprüche 6 oder 7, bei dem der mittlere Teil (9) zumindest eine Rippe (91) zum Verstärken der Stabilität der Lasche (30) umfasst, wobei die besagte Rippe in etwa in einer Querschnittsebene der Lasche (30) liegt und an den Stegen (101, 111) der Seitenteile (10, 11) befestigt ist.

9. Flugzeugrumpf nach einem der Ansprüche 6 bis 8, bei dem die Seitenteile (10, 11) am Ende der Stege (101, 111) einen gebogenen Rand (104, 114) umfassen, der gegenüber den Sohlen (102, 112) der Lasche (30) liegt.
